(19) **Europäisches Patentamt / European Patent Office / Office européen des brevets**

(11) **EP 2 908 155 B1**

(12) **FASCICULE DE BREVET EUROPEEN**

(45) Date de publication et mention
de la délivrance du brevet:
**01.02.2017 Bulletin 2017/05**

(51) Int Cl.:
**G01S 19/21** *(2010.01)* **G01S 19/36** *(2010.01)*
**G01S 3/74** *(2006.01)*

(21) Numéro de dépôt: **15154995.3**

(22) Date de dépôt: **13.02.2015**

(54) **Procédé de traitement antibrouillage d'un signal radioélectrique, module et programme d'ordinateur associés**

Verfahren zur Entstörung eines Funkfrequenzsignals, entsprechendes Modul und Computerprogramm

Method for anti-jamming processing of a radio signal, related module and computer program

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2014 FR 1400410**

(43) Date de publication de la demande:
**19.08.2015 Bulletin 2015/34**

(73) Titulaire: **Thales**
**92400 Courbevoie (FR)**

(72) Inventeurs:
• **MARTIN, Nicolas**
**26000 VALENCE (FR)**
• **ROLLET, Stéphane**
**26000 VALENCE (FR)**
• **MONTAGNE, Bruno**
**26000 VALENCE (FR)**

(74) Mandataire: **Lavoix**
**2, place d'Estienne d'Orves**
**75441 Paris Cedex 09 (FR)**

(56) Documents cités:
**US-A- 6 141 371 US-A1- 2002 169 578**
**US-A1- 2013 154 880**

• KURZ L ET AL: "An architecture for an embedded antenna-array digital GNSS receiver using subspace-based methods for spatial filtering", SATELLITE NAVIGATION TECHNOLOGIES AND EUROPEAN WORKSHOP ON GNSS SIGNALS AND SIGNAL PROCESSING, (NAVITEC), 2012 6TH ESA WORKSHOP ON, IEEE, 5 décembre 2012 (2012-12-05), pages 1-8, XP032322219, DOI: 10.1109/NAVITEC.2012.6423050 ISBN: 978-1-4673-2010-8

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de traitement antibrouillage d'un signal radioélectrique émis par une source et obtenu par modulation d'une porteuse par un code d'étalement, le code d'étalement résultant de la multiplication d'une forme d'onde par chaque élément d'une séquence binaire propre à la source, ledit procédé de traitement antibrouillage comprenant les étapes suivantes :

- réception, en M capteurs distincts dudit signal radioélectrique ;
- détermination de la corrélation entre eux d'échantillons de signal issus de la réception, à L instants distincts, auxdits M capteurs, dudit signal, puis détermination de coefficients de pondération en fonction de ladite corrélation déterminée, M et L étant des entiers positifs, et un au moins de M et L étant strictement supérieur à 1 ;
- obtention d'un signal traité ($S_{stap}$) par combinaison linéaire desdits échantillons de signal issus de la réception à L instants distincts, auxdits M capteurs et pondérés par lesdits coefficients de pondération.

Un tel traitement antibrouillage est par exemple effectué dans des systèmes de positionnement par satellites comme dans la demande de brevet US2013/0154880.

Pour rappel, dans de tels systèmes, plusieurs satellites transmettent des signaux radioélectriques. Un récepteur, positionné sur la position à localiser, capte les signaux satellites à l'aide de M capteurs, et les numérise. Puis le récepteur effectue un traitement antibrouillage sur ces signaux captés, par exemple à l'aide de la méthode spatio-temporelle STAP (en anglais « Spatio Temporal Adaptative Processing ») selon laquelle le signal traité est une combinaison linéaire des signaux reçus sur les M capteurs et de leurs versions retardées, pondérés par des coefficients de pondérations calculés pour rejeter le brouillage en conservant les signaux satellite utiles.

Une fois le traitement antibrouillage effectué, le récepteur effectue une démodulation, dans une boucle PLL (en anglais « Phase Lock Loop »), de la porteuse du signal reçu à l'aide d'une porteuse engendrée localement par un oscillateur piloté, et une démodulation du code d'étalement du signal reçu, dans une boucle DLL (en anglais « Delay Lock Loop »), à l'aide de séquences binaires pseudo-aléatoires engendrées localement par un générateur, afin de désétaler les signaux reçus.

Puis le récepteur estime les distances qui le séparent des satellites à partir des temps de propagation des signaux satellites captés, et détermine alors la localisation recherchée par triangulation sur la base de ces distances.

Le traitement numérique STAP nécessite le calcul préalable d'une matrice d'intercorrélation, nommée $R_{xx}$, pour caractériser les brouilleurs à éliminer. Ce calcul est consommateur de ressources matérielles, notamment du fait des nombreux multiplicateurs complexes (les signaux issus de la numérisation sont en effet sous forme complexe). En outre, la méthode d'inversion de puissance, ou méthode de Capon, souvent utilisée pour calculer les coefficients de pondération suppose une puissance de signal utile constante dans la bande passante avant numérisation, ce qui n'est pas le cas avec des signaux de positionnement par satellite à bande étroite et qui conduit à une dégradation des performances.

Il est donc nécessaire d'accroître les performances des traitements antibrouillage de l'art antérieur.

A cet effet, suivant un premier aspect, l'invention propose un procédé de traitement anti-brouillage selon la revendication 1.

Un tel procédé permet de faire prendre en compte, lors du calcul des intercorrélations entre les signaux, les caractéristiques des signaux sources émis. Les performances du traitement antibrouillage se trouvent améliorées et le nombre d'opérations nécessaires au calcul de la matrice d'intercorrélation peut aussi être réduit par sous-échantillonnage.

Dans des modes de réalisation, le procédé de traitement antibrouillage suivant l'invention comporte en outre une ou plusieurs des caractéristiques suivantes selon les revendications dépendantes 2 à 10.

Suivant un deuxième aspect, la présente invention propose un programme d'ordinateur à installer dans un module de traitement antibrouillage, ledit programme comportant des instructions pour mettre en oeuvre les étapes d'un procédé suivant le premier aspect de l'invention lors d'une exécution du programme par des moyens de traitement dudit module.

Suivant un troisième aspect, la présente invention propose un module de traitement antibrouillage selon la revendication 12.

Dans des modes de réalisation, le module de traitement antibrouillage suivant l'invention comporte en outre une ou plusieurs des caractéristiques suivantes selon les revendications dépendantes 13 à 21.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une vue d'un récepteur de système de positionnement par satellites implémentant un traitement antibrouillage dans un mode de réalisation de l'invention ;
- la figure 2 est une vue détaillée de la fonction réalisée par un filtre FIR n° m de la figure 1 ;

- la figure 3 est une vue détaillée d'une partie de la vue représentée en figure 1 dans un mode de réalisation, illustrant le calcul de la matrice d'intercorrélation ;
- la figure 4 illustre plus en détail le calcul de la matrice d'intercorrélation représenté en figure 3 ;
- la figure 5 est une vue d'un filtre $F_{adaptm}$ adapté à la forme d'onde du signal source dans un mode de réalisation ;
- la figure 6 est une vue d'un procédé dans un mode de mise en oeuvre de l'invention ;
- la figure 7 illustre le traitement réalisé par un sous-bloc $Cal_i$ du bloc 5 de traitement par canal satellite représenté en figure 1 ;
- la figure 8 est une vue sur l'axe des temps d'un code d'étalement, d'une porteuse, d'une sous-porteuse et d'un signal émis ;
- la figure 9 est une vue de la fonction d'autocorrélation en fonction du temps dans le cas de modulation BOC ou BPSK et de la densité spectrale de puissance correspondante.

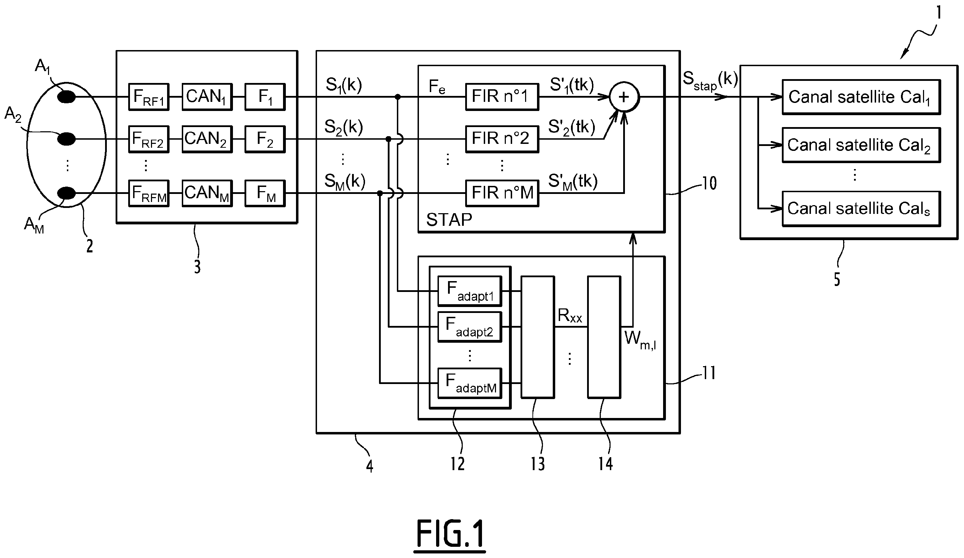

La figure 1 représente une vue d'un récepteur 1 de système GNSS de positionnement par satellites (en anglais « Global Navigation Satellite System »). Le récepteur 1 implémente un traitement antibrouillage dans un mode de réalisation de l'invention.

Les s satellites $Sat_i$, i = 1 à s, du système GNSS émettent sur les mêmes fréquences.

Chaque satellite $Sat_i$ du système génère un signal radiofréquence à l'aide d'une porteuse sinusoïdale (fréquence de 1,2 à 1, 6GHz), éventuellement d'une sous-porteuse dans le cas d'une modulation BOC ou à double décalage de porteuse, modulée par un code d'étalement binaire connu propre à chaque satellite (fréquence de 10 à 1 MHz), puis émet le signal radiofréquence ainsi généré.

Les codes d'étalement sont constitués d'un grand nombre de divisions temporelles élémentaires, appelées « chips » de code qui ont une durée égale à $T_c$.

Le code d'étalement est obtenu par multiplication d'une forme d'onde, nommée FO, de durée $T_c$ par successivement chaque élément +1 ou -1 d'une séquence binaire propre au satellite.

Dans le cas d'une modulation BPSK (« Binary Phase Shift Keying »), la forme d'onde FO est rectangulaire. La fonction d'autocorrélation du signal émis est donc triangulaire et la densité spectrale de puissance du signal émis est un sinus cardinal au carré.

Une modulation BOC (en anglais « Binary Offset Carrier ») utilise une porteuse, une sous-porteuse carrée et un code d'étalement. La forme d'onde FO est en signe de sinus (créneaux). La densité spectrale de puissance du signal émis comporte deux lobes principaux et la fonction d'autocorrélation correspondante comporte des pics multiples.

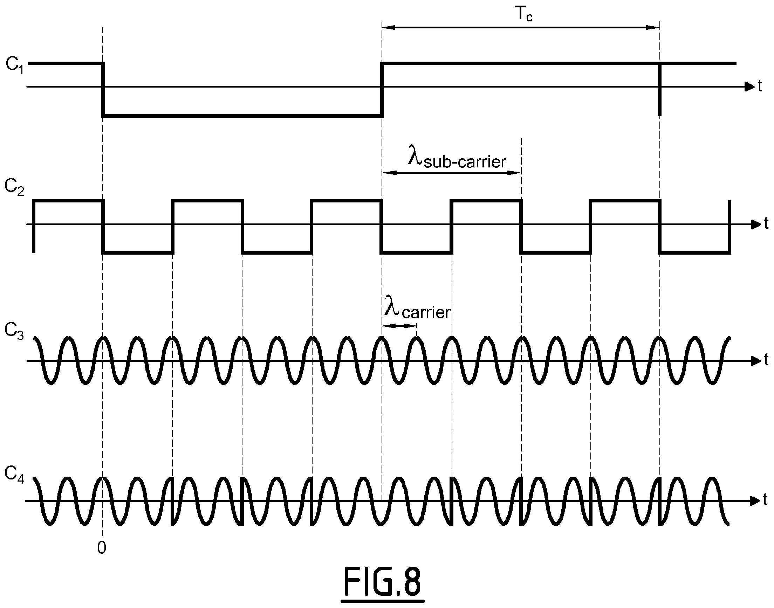

A titre d'illustration, sur la figure 8, les courbes suivantes en fonction du temps t sont représentées :

- courbe C1 : code d'étalement de période élémentaire $T_c$,
- courbe C2 : sous-porteuse, de période $\lambda_{sub-carrier}$,
- courbe C3 : porteuse, de période $\lambda_{carrier}$,
- courbe C4 : signal émis suite à la modulation BOC selon ces code, porteuse et sous-porteuse.

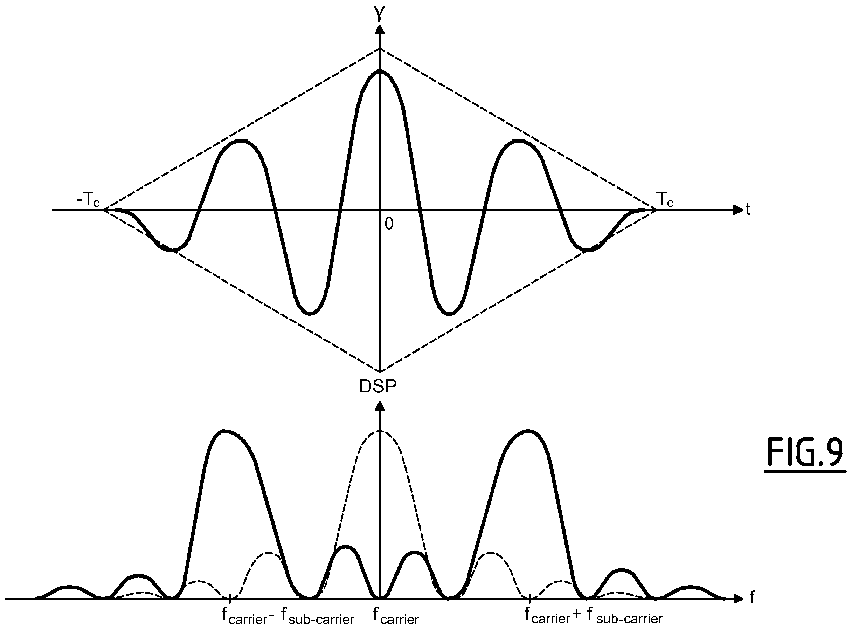

La figure 9 représente, dans sa partie supérieure, la fonction d'autocorrélation $\gamma$ en fonction du temps t dans le cas d'une modulation BOC (traits pleins) ou BPSK (tirets) et, dans sa partie inférieure, la densité spectrale de puissance DSP correspondant à la modulation BOC (traits pleins) ou BPSK (tirets) en fonction de la fréquence f ($f_{carrier}$ étant l'inverse de $\lambda_{carrier}$ et $f_{sub-carrier}$ étant l'inverse de $\lambda_{sub-carrier}$), pour des code, porteuse et ou sous-porteuse (BOC) correspondant à ceux de la figure 8.

Le récepteur 1 comporte des moyens de réception 2 des signaux satellites, par exemple dans le cas considéré une antenne à diagramme de rayonnement contrôlé CRPA (en anglais « Controled Radiation Pattern Array ») comportant M capteurs $A_m$, m = 1 à M, avec M nombre entier supérieur ou égal à 1.

Le récepteur comporte en outre un module 3 de prétraitement comportant M voies, un module 4 de traitement antibrouillage et un module 5 de détermination de la localisation du récepteur.

Chacun des M capteurs est adapté pour capter les signaux radiofréquences présents dans la bande de fréquences de fonctionnement des capteurs, puis pour délivrer un signal radiofréquence analogique tel que capté $S_m(t)$, m = 1 à M, au module de prétraitement 3.

Le module 3 de prétraitement comprend M voies parallèles. Chaque voie m du module 3 de prétraitement comporte au moins un filtre analogique $F_{RFm}$, un convertisseur analogique-numérique $CAN_m$ réalisant un échantillonnage et une numérisation du signal $S_m(t)$, à la fréquence $F_e$, et un module $F_m$ de passage en bande de base dans lequel le signal reçu numérisé réel est multiplié par un signal numérique complexe $\exp(2j\pi\,Fe/4\,t_k)$ suivant l'état de l'art, et délivre en sortie de la voie n° m les échantillons $S_m(k)$ d'un signal numérique complexe ($S_m(k) = S_m(t_k) = S_m(T0+k/F_e)$), k entier, m = 1 à M, au module de traitement antibrouillage 4.

Le module de traitement antibrouillage 4 comporte un bloc principal 10 de rejet des brouillages et un bloc secondaire 11 de détermination de coefficients de pondération utilisés par le bloc principal 10.

Le bloc principal 10 de rejet des brouillages est adapté pour effectuer le traitement STAP. Il comporte M voies parallèles, opérant à la fréquence $F_e$.

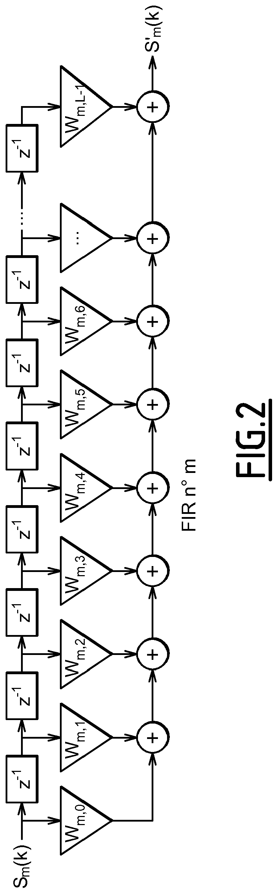

Le signal $S_m(k)$ y est reçu en entrée de la m$^{ème}$ voie, puis est fourni à l'entrée d'un filtre numérique à réponse impulsionnelle finie FIR n° m qui est illustré plus en détail à la figure 2. Il comporte L-1 éléments à retards unitaires. La sortie de chaque élément à retard est multipliée par un coefficient de pondération, de même que le signal $S_m(k)$. Ainsi le FIR n°m délivre en sortie un signal $S'_m(k) = \sum_{l=0\ \text{à}\ L-1} W_{m,l}.S_m(k - \dfrac{l}{F_e})$.

Les signaux $S'_m(k)$, m = 1 à M, sont ensuite sommés dans le bloc principal 10 :

$$S_{stap}(k) = \sum_{m=1\ \text{à}\ M} S'_m(k)\ ,$$

soit

$$S_{stap}(k) = \sum_{m=1\ \text{à}\ M}\ \sum_{l=0\ \text{à}\ L-1} W_{m,l}.S_m(k - \frac{l}{F_e}) = \sum_{m=1\ \text{à}\ M,\ l=0\ \text{à}\ L-1} W_{m,l}.S_m(k - \frac{l}{F_e})\ ,\ m$$

étant l'indice des capteurs, I étant l'indice des retards.

Le signal résultant du traitement antibrouillage $S_{stap}(k)$ est délivré en sortie du bloc principal 10 et est fourni en entrée du module 5 de détermination de la localisation du récepteur.

Le bloc secondaire 11 de détermination de coefficients de pondération est adapté pour déterminer les valeurs actualisées des coefficients de pondérations $W_{m,l}$ utilisés par le bloc principal 10.

Dans le mode de réalisation considéré, il comprend un sous-bloc 12 de filtres adaptés à la modulation comportant M voies de traitement parallèle n° 1 à M, un sous-bloc 13 d'intercorrélation et un sous-bloc 14 de calcul des coefficients de pondération.

Dans le mode de réalisation considéré, dans le sous-bloc 12 de filtres adaptés à la modulation, le signal $S_m(k)$ est délivré, en entrée de la voie n° m, à un filtre $F_{adaptm}$, dont la réponse impulsionnelle est adaptée, par exemple sensiblement égale, à la forme d'onde FO du signal émis correspondant au signal reçu.

Ce filtre $F_{adaptm}$ permet de tenir compte de la forme d'onde FO dans le calcul des valeurs actualisées des coefficients de pondération $W_{m,l}$.

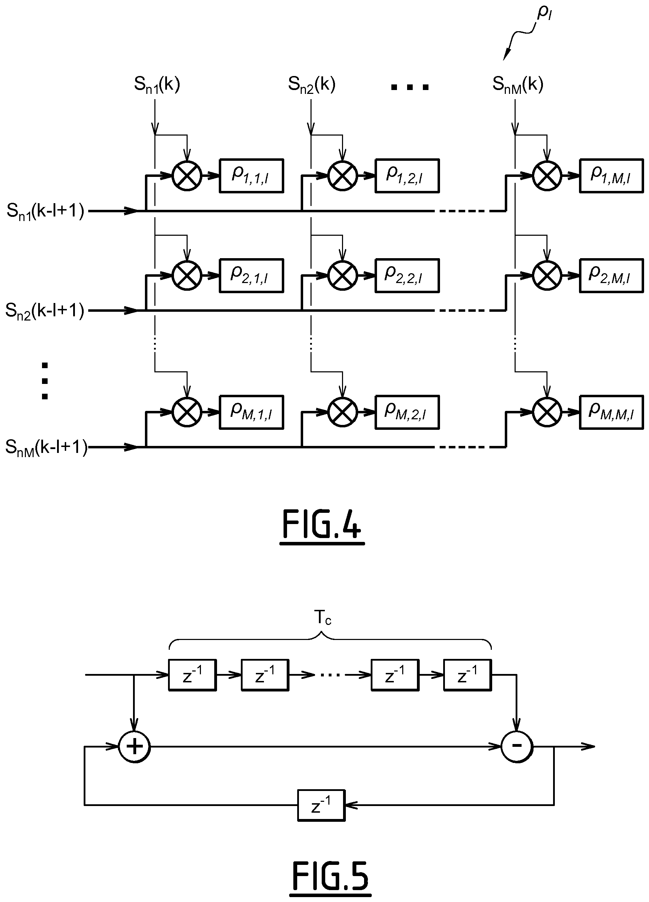

Dans un mode de réalisation particulier, le filtre adapté à la forme d'onde $F_{adaptm}$ est un filtre à horizon glissant, opérant à la fréquence $F_e$. Dans l'exemple représenté en figure 5, il reçoit en entrée la partie réelle ou imaginaire (I ou Q) du signal complexe $S_m(k)$ et comporte :

- une ligne à retard comportant un nombre d'éléments unitaires de retard (fonction de transfert égale à $z^{-1}$ provoquant le retard d'une durée 1/Fe séparant deux échantillons du signal) en série de nature à introduire un retard global égal à la durée Tc d'un chip de code ;
- un soustracteur, un additionneur et un élément à retard unitaire sur une boucle de rétroaction de la sortie du soustracteur vers l'entrée de l'additionneur.

Le sous-bloc 13 d'intercorrélation est adapté pour calculer la corrélation entre les signaux issus des M différents capteurs, et/ou leurs versions retardées de 0 à L-1 échantillons, par exemple via le calcul de la matrice d'intercorrélation $R_{xx}$.

La matrice $R_{xx}$ peut être représentée sous forme d'une matrice à coefficients matriciels

$$R_{xx} = \begin{bmatrix} [R_0] & .. & [R_l{}^{*T}] & [R_{l+1}{}^{*T}] & [R_{l+2}{}^{*T}] & .. & [R_{L-1}{}^{*T}] \\ \vdots & & \vdots & & \vdots & & \vdots \\ [R_l] & .. & [R_0] & [R_1{}^{*T}] & [R_2{}^{*T}] & .. & [R_{l+2}{}^{*T}] \\ [R_{l+1}] & .. & [R_1] & [R_0] & [R_1{}^{*T}] & .. & [R_{l+1}{}^{*T}] \\ [R_{l+2}] & .. & [R_2] & [R_1] & [R_0] & .. & [R_l{}^{*T}] \\ \vdots & & \vdots & & \vdots & & \vdots \\ [R_{L-1}] & .. & [R_{l+2}] & [R_{l+1}] & [R_l] & .. & [R_0] \end{bmatrix}_{L.M \, x \, L.M}$$

avec, pour

$$l = 0 \text{ à } L\text{-}1, \quad R_l = \begin{bmatrix} r_{1,1,l} & .. & r_{1,m,l} & .. & r_{1,M,l} \\ \vdots & & \vdots & & \vdots \\ r_{m,1,l} & .. & r_{m,m,l} & .. & r_{m,M,l} \\ \vdots & & \vdots & & \vdots \\ r_{M,1,l} & .. & r_{M,m,l} & .. & r_{M,M,l} \end{bmatrix}_{M \, x \, M} \qquad \text{où } r_{m,n,l} = \int S_m(\,t\,) \, . \, S_n(\,t - l/F_e\,)^* \, . \, dt$$

(la notation S* indique le conjugué de S).

La durée d'intégration dt (par exemple d'une durée de 100 échantillons) détermine la fréquence de rafraîchissement des valeurs des coefficients de pondération.

$R_{xx}$ a ses coefficients matriciels identiques sur chaque diagonale (matrice de Toeplitz).

$R_{xx}$ est symétrique, au sens hermitien (i.e. $R^T = R^*$), $R_0$ aussi : $R_0 = R_0{}^{*T}$.

Le sous-bloc 14 de calcul des coefficients de pondération est adapté pour calculer les coefficients de pondération actualisés $W_{m,l}$ en fonction de la matrice $R_{xx}$ actualisée et fournir ces coefficients de pondérations au bloc principal 10.

Le module 5 de détermination de la localisation du récepteur comporte un bloc par canal satellite $Cal_i$, i = 1 à s, adapté pour démoduler le signal émis par le satellite $Sat_i$ à l'aide d'une boucle PLL et d'une boucle DLL. Le décalage temporel entre le signal émis par le satellite $Sat_i$ à une date connue et le signal reçu par le récepteur à une date à déterminer correspond à la durée recherchée de propagation du signal. Dans le bloc $Cal_i$, une réplique du code émis est générée localement. La date de réception du signal est mesurée en mettant en phase le signal reçu et le signal local. Le critère de mise en phase correspond à la maximisation de la fonction de corrélation des deux signaux, des hypothèses de décalage différentes étant considérées pour chaque calcul de corrélation.

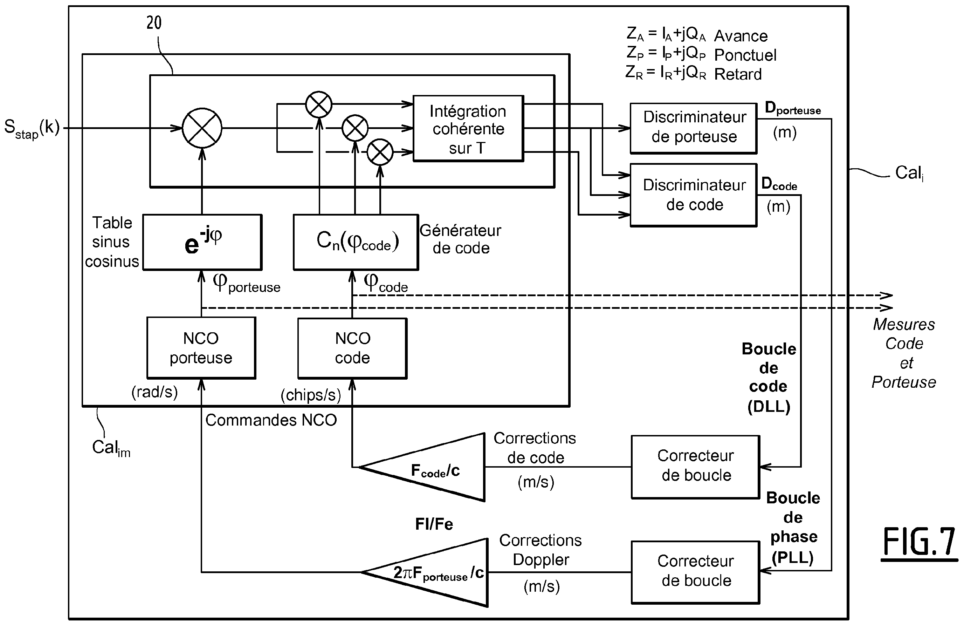

Ces opérations faisant partie de l'état de l'art sont illustrées succinctement en figure 7.

Dans le mode de réalisation particulier illustré en figure 7, les opérations au sein du bloc $Cal_{im}$ sont réalisées en matériel, celles hors du bloc et au sein du bloc Cali sont réalisées en logiciel.

Le module 5 de détermination de la localisation du récepteur est en outre adapté pour déterminer la localisation du récepteur 1 en fonction des durées de propagations des signaux déterminées pour les différents satellites, par triangulation.

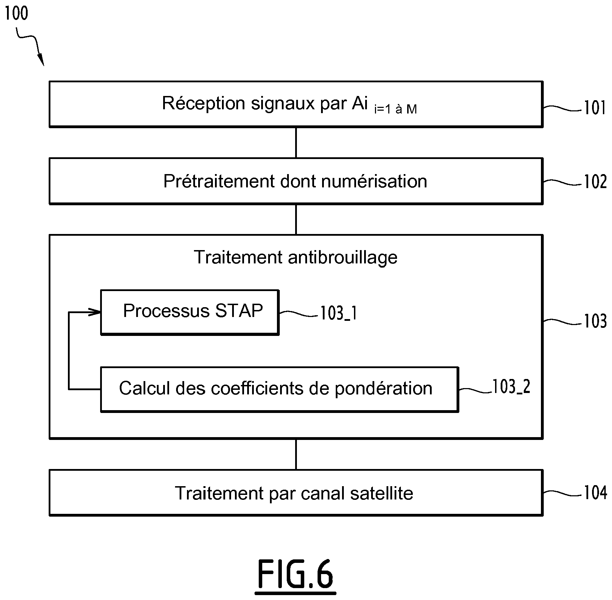

Les étapes d'un procédé mis en oeuvre selon l'invention sont décrites ci-dessous en référence à la figure 6.

Dans une étape 101, les M capteurs $A_m$, m = 1 à M, captent les signaux émis par les satellites $sat_i$, i = 1 s et les délivrent au bloc de prétraitement 3.

Dans une étape de pré-traitement 102, chacun des signaux analogiques $S_m(t)$, m = 1 à M, transmis par le capteur $A_m$, est filtré à l'aide du filtre $F_{RFm}$, numérisé à la fréquence d'échantillonnage $F_e$ par le $CAN_m$, puis est transposé en bande de base dans le module $F_m$. Les échantillons de signal numérique $S_m(k)$, m = 1 à M, résultant de ce prétraitement sont fournis en parallèle au module de traitement antibrouillage 4.

Dans une étape 103 de traitement anti-brouillage, un traitement STAP est mis en oeuvre dans le bloc principal 10 de rejet des brouillages qui effectue, dans une sous-étape 103_1 s'effectuant à la fréquence $F_e$, une combinaison linéaire des échantillons des signaux $S_m(k)$ et des échantillons précédents, ces échantillons étant pondérés par des coefficients de pondération respectifs. Les valeurs considérées pour ces coefficients de pondérations prennent les dernières valeurs fournies par le bloc secondaire 11 de détermination de coefficients de pondération.

Le signal $S_{stap}(k)$ résultant de cette combinaison linéaire est délivré au module 5 de détermination de la localisation du récepteur.

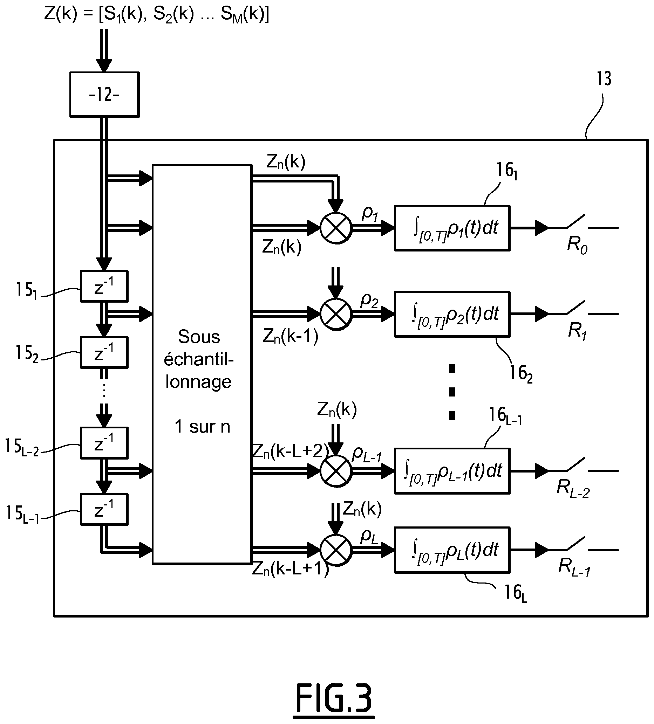

Dans une sous-étape 103_2 réalisée en parallèle à une fréquence $F_w = 1/T_w$, les coefficients de pondération $W_{m,l}$, m = 1 à M, l = 0 à L-1, sont actualisés. A cette fin, dans le mode de réalisation considéré, sur chaque voie de traitement parallèle m, les signaux $S_m(k)$ sont filtrés par le filtre $F_{adaptm}$ du bloc 12, puis, dans le cas considéré en référence à la figure 3, ils sont sous-échantillonnés,

La matrice d'intercorrélation $R_{xx}$ est déterminée par le sous-bloc 13 d'intercorrélation sur de ces signaux filtrés et ici en outre sous-échantillonnés, puis les coefficients de pondération $W_{m,l}$, sont déduits par le sous-bloc 14 de calcul des coefficients à partir de la matrice d'intercorrélation $R_{xx}$.

Les coefficients de pondération $W_{m,l}$ ainsi actualisés sont fournis au bloc principal 10 de rejet des brouillages pour qu'ils soient pris en compte dans la suite du traitement STAP à la place des anciennes valeurs précédemment calculées pour ces coefficients.

L'étape 103_2 de calcul des coefficients de pondération est réalisée selon une période $T_w$ qui dans un mode de réalisation correspond au meilleur compromis entre charge de calcul, réactivité à l'environnement de brouillage et performance de réjection.

Dans une étape 104, dans le module 5 de détermination de la localisation du récepteur, un traitement par canal satellite est réalisé, puis la localisation du récepteur 1 est déterminée.

La matrice $R_{xx}$ définie ci-dessus peut être calculée de différentes manières, en matériel ou en logiciel, par corrélation entre les voies ou par une méthode utilisant la racine carrée triangulaire.

Dans un mode de réalisation permettant d'optimiser les performances du traitement antibrouillage, $R_{xx}$ est calculée en matériel en temps réel par intercorrélation entre les M voies retardées de 0 à L-1 retards.

La figure 3 illustre d'un mode de réalisation particulier dans lequel les M signaux issus des capteurs fournis en entrée du sous-bloc secondaire 11, échantillonnés à la fréquence $F_e$, sont représentés par le vecteur Z(k), de dimension M, avec Z(k) = [$S_1(k)$, $S_2(k)$,..., $S_M(k)$]. Le vecteur de signaux Z(k) est fourni au sous-bloc 12 de filtrage adapté à la modulation, puis fourni à l'entrée du sous-bloc 13 d'intercorrélation.

Dans le sous-bloc 13 d'intercorrélation, le vecteur de signaux Z(k) est fourni à une ligne à retard comprenant L-1 éléments à retard unitaire $15_i$, (i = 1 à L-1) disposés en série. Le signal Z(k-l+1) résultant de chaque (l-1)ième retard unitaire (l = 1 à L) est fourni en entrée d'un sous-échantillonneur, élisant un échantillon sur n échantillons successifs. Le sous-échantillonnage du signal Z(k-l+1) délivre le signal sous-échantillonné nommé $Z_n(k-l+1)$, l = 1 à L ($Z_n(k-l+1)$ = [ $S_{n1}(k-l+1)$, $S_{n2}(k-l+1)$,..., $S_{nM}(k-l+1)$]) où $S_{nm}(k)$ représente l'échantillon k issu du sous-échantillonnage du signal $S_{nm}$, m = 1 à M)

En aval du sous-échantillonnage, la fréquence de travail est donc $F_e/n$.

Chaque vecteur de signaux $Z_n(k-l+1)$, l = 1 à L, est fourni en entrée d'un multiplicateur complexe dans lequel chacune de ses coordonnées $S_{nm}(k-l+1)$, m = 1 à M, est multipliée par chaque coordonnée $S_{nm}(k)$ de $Z_n(k)$.

Le résultat de cette multiplication est une matrice $\rho_l$, de taille MxM avec $\rho_l[u,v] = \rho_{u,v,l} = S_{nu}(k-l+1) \times S_{nv}(k)$ , u = 1 à M et v = 1 à M.

La figure 4 illustre plus en détail l'opérateur de corrélation spatiale donnant lieu à l'obtention des termes $\rho_{u,v,l}$ de la matrice $\rho_l$, , u = 1 à M et v = 1 à M.

En référence à la figure 3, dans le sous-bloc 13 d'intercorrélation, la matrice $\rho_l$, ainsi définie est délivrée à un intégrateur c qui est adapté pour réaliser sur chaque terme de la matrice une intégration de durée $T_w$. L'intégrateur délivre ainsi le résultat de l'intégration de la matrice $\rho_l$, égale à la matrice [$R_{l-1}$], sous-élément de la matrice d'intercorrélation $R_{xx}$.

Dans un mode de réalisation, la méthode de Capon est utilisée pour déterminer les coefficients de pondération $W_{m,l}$, m = 1 à M, l = 0 à L-1, sur la base de l'équation suivante :

$$W = \frac{R_{xx}^{-1}C}{C^T R_{xx}^{-1}C} ,$$

où

- W est le vecteur des coefficients de pondération : W = [$W_0$ $W_1$... $W_{L-1}$] et $W_l$ = [ $W_{1,l}$ \\

- C est le vecteur de contrainte : C = $C_{temporel} \otimes C_{spatial}$ ($\otimes$ produit de Kronecker), avec $C_{temporel} = \begin{bmatrix} ct_1 \\ \vdots \\ ct_{(L-1)/2} \\ \vdots \\ ct_L \end{bmatrix}$ est

le vecteur de contrainte temporelle, de dimension Lx1 ; $C_{spatial} = \begin{bmatrix} cs_1 \\ : \\ cs_M \end{bmatrix}$ est le vecteur de contrainte spatiale,

de dimension Lx1 ; $\Rightarrow C = C_{temporel} \otimes C_{spatial} = \begin{bmatrix} \begin{bmatrix} ct_1.cs_1 \\ : \\ ct_1.cs_M \end{bmatrix} \\ : \\ \begin{bmatrix} ct_L.cs_1 \\ : \\ ct_L.cs_M \end{bmatrix} \end{bmatrix}$ de dimension (L.M)x1 ;

Les termes du vecteur de contrainte spatiale sont obtenus à partir des déphasages $\theta_m$ des capteurs $A_m$, m = 1 à M, par rapport à la direction satellite choisie :

$$C_{spatial} = \begin{bmatrix} \exp(j\theta_1) \\ : \\ \exp(j\theta_M) \end{bmatrix}$$

Les déphasages $\theta_m$ sont calculés à partir d'une direction privilégiée, par exemple la verticale en repère antenne, suivant l'état de l'art. On peut aussi prendre comme vecteur de contrainte spatiale le vecteur $[1 , 0 , ... , 0]^T$ pour ne privilégier aucune direction.

Le vecteur $C_{temporel} = [ct_1\ ct_2\ ...\ ct_L]^T$ est fonction de la densité spectrale de puissance de la forme d'onde FO des signaux satellites. Une telle disposition permet de tenir compte de la densité spectrale des signaux satellites utiles contenus dans les signaux numérisés dans le calcul des pondérations W et ainsi avoir un performance de réjection de brouillage améliorée.

Par exemple, dans un mode de réalisation :

$$ct_l = \int H_{\text{filtre RF}}(f) . DSP_{\text{signal satellite}}(f) . \exp(\ 2j\pi .( l - l_0 ) . f / F_e ) . df, l = 1 \text{ à } L,$$

où $H_{\text{filtre RF}(f)}$ est la réponse fréquentielle des filtres analogiques $F_{RFm}$, m = 1 à M, supposée identique sur tous les filtres.

$DSP_{\text{signal satellite}}(f)$ est la densité spectrale de puissance des signaux satellites utiles, (par exemple $DSP_{\text{signal satellite}}(f) = T_c. \text{sinc}(f .T_c)$ dans le cas d'un signal BPSK) ;

$$l_0 = (L+1)/2.$$

Il n'est pas nécessaire d'avoir une modélisation fine de la fonction de transfert des filtres analogiques $F_{RFm}$. Un gabarit valant 1 ou 0 selon que l'on est dans la bande passante du filtre ou pas est suffisant : $H_{\text{filtre RF}}(f) = 1$ si f appartient à la bande passante du filtre, $H_{\text{filtre RF}}(f) = 0$ sinon.

L'ordre du traitement STAP est défini comme le nombre de retards unitaires (i.e. L-1). Le nombre L de coefficients de pondération par voie est donc égal à l'ordre augmenté de 1. Un ordre égal à 0 (i.e. L=1) signifie un traitement sans décalage temporel, c'est-à-dire un traitement purement spatial (SAP).

Dans un mode de réalisation, on choisit un ordre de valeur paire de manière à avoir un nombre de coefficients impair pour la symétrie du vecteur contrainte temporelle $C_{temporel}$. Cette symétrie évite d'introduire des temps de propagation parasites lors du traitement STAP.

On notera que lorsque l'antenne n'a qu'un seul capteur (M = 1), le traitement STAP selon l'invention se réduit à un traitement TAP (Temporal Adaptive Processing) qui permet d'éliminer des brouilleurs à bande étroite (excision de fréquence). La méthode de Capon permet en fait de réaliser une inversion de puissance dans le domaine fréquentiel, plus efficace et robuste qu'une technique de « blanking » fréquentiel : $C = C_{temporel} \otimes C_{spatial} = C_{temporel}$, avec $C_{spatial}$

= [1]$_{1x1}$ et

$$C_{temporel} = \begin{bmatrix} ct_1 \\ \vdots \\ ct_{(L-1)/2} \\ \vdots \\ ct_L \end{bmatrix}.$$

Dans le mode de réalisation décrit ci-dessus, le filtrage adapté à la modulation (filtres $F_{adaptm}$ du sous-bloc 12) était réalisé dans le bloc secondaire 11 de détermination de coefficients de pondération.

Dans un autre mode de réalisation, le filtrage adapté est réalisé à la place en amont du module de traitement antibrouillage 4 : le sous-bloc 12 de filtres adaptés à la modulation est alors disposé entre le module 3 de prétraitement et le module de traitement antibrouillage 4. Le traitement STAP est alors réalisé sur les signaux ainsi filtrés.

Un sous-échantillonnage est mis en oeuvre dans des modes de réalisation dans le bloc secondaire 11 de détermination de coefficients de pondération comme illustré en figure 3. Dans des modes de réalisation, un sous-échantillonnage synchronisé sur les chips de code local grâce au NCO code est réalisé sur le signal $S_{stap}(k)$ dans chaque bloc Cal$_i$, permettant de bénéficier du gain d'étalement de la forme d'onde en limitant le nombre de calculs dans ce bloc.

Dans un mode de réalisation où la modulation BOC est utilisée, le traitement des signaux reçus pourra être dupliqué : la composante correspondant au lobe gauche, respectivement la composante correspondant au lobe droit, de signal reçu sera fourni en entrée d'un module de traitement antibrouillage 4, après passage en bande de base autour de la porteuse gauche ($f_{carrier}$ - $f_{sub-carrier}$), respectivement la porteuse droite ($f_{carrier}$ + $f_{sub-carrier}$), avec utilisation d'un filtre adapté à la modulation BPSK associée à chaque lobe assimilé à un signal BPSK. Le traitement antibrouillage est donc réalisée de façon indépendante d'une part relativement au lobe droit, d'autre part relativement au lobe gauche.

Chacune des composantes résultant du traitement antibrouillage sera fournie en entrée du module 5 de détermination de la localisation du récepteur.

Dans le mode de réalisation décrit en référence aux figures, il a été mis en oeuvre un filtrage adapté à la forme d'onde par le bloc 12 de filtres, un sous-échantillonnage, et la prise en compte dans le vecteur de contrainte de la densité spectrale de puissance de la forme d'onde. Dans d'autres modes de réalisation de l'invention, seule l'une ou certaines de ces dispositions sont mises en oeuvre.

Certains des traitements détaillés ci-dessus sont mis en oeuvre, dans des modes de réalisation, par le module de traitement anti brouillage 4 suite à l'exécution sur des moyens de calcul du module de traitement antibrouillage 4, d'instructions logicielles stockées dans un mémoire du module 4.

La présente invention a été décrite ci-dessus en référence à un récepteur de système de positionnement par satellite. Elle peut bien sûr être mise en oeuvre dans tout autre type de récepteur de signaux de navigation effectuant un traitement antibrouillage, par exemple dans le cas de signaux de navigation émis par des balises au sol.

Dans un autre mode de réalisation, le filtrage adapté est réalisé à la place en amont du module de traitement antibrouillage 4 : le sous-bloc 12 de filtres adaptés à la modulation est alors disposé entre le module 3 de prétraitement et le module de traitement antibrouillage 4. Le traitement STAP est alors réalisé sur les signaux ainsi filtrés.

Un sous-échantillonnage est mis en oeuvre dans des modes de réalisation dans le bloc secondaire 11 de détermination de coefficients de pondération comme illustré en figure 3. Dans des modes de réalisation, un sous-échantillonnage synchronisé sur les chips de code local grâce au NCO code est réalisé sur le signal $S_{stap}(k)$ dans chaque bloc Cal$_i$, permettant de bénéficier du gain d'étalement de la forme d'onde en limitant le nombre de calculs dans ce bloc.

Dans un mode de réalisation où la modulation BOC est utilisée, le traitement des signaux reçus pourra être dupliqué : la composante correspondant au lobe gauche, respectivement la composante correspondant au lobe droit, de signal reçu sera fourni en entrée d'un module de traitement antibrouillage 4, après passage en bande de base autour de la porteuse gauche ($f_{carrier}$ - $f_{sub-carrier}$), respectivement la porteuse droite ($f_{carrier}$ + $f_{sub-carrier}$), avec utilisation d'un filtre adapté à la modulation BPSK associée à chaque lobe assimilé à un signal BPSK. Le traitement antibrouillage est donc réalisée de façon indépendante d'une part relativement au lobe droit, d'autre part relativement au lobe gauche.

Chacune des composantes résultant du traitement antibrouillage sera fournie en entrée du module 5 de détermination de la localisation du récepteur.

Dans le mode de réalisation décrit en référence aux figures, il a été mis en oeuvre un filtrage adapté à la forme d'onde par le bloc 12 de filtres, un sous-échantillonnage, et la prise en compte dans le vecteur de contrainte de la densité spectrale de puissance de la forme d'onde. Dans d'autres modes de réalisation de l'invention, seule l'une ou certaines de ces dispositions sont mises en oeuvre.

Certains des traitements détaillés ci-dessus sont mis en oeuvre, dans des modes de réalisation, par le module de traitement anti brouillage 4 suite à l'exécution sur des moyens de calcul du module de traitement antibrouillage 4, d'instructions logicielles stockées dans un mémoire du module 4.

La présente invention a été décrite ci-dessus en référence à un récepteur de système de positionnement par satellite. Elle peut bien sûr être mise en oeuvre dans tout autre type de récepteur de signaux de navigation effectuant un traitement antibrouillage, par exemple dans le cas de signaux de navigation émis par des balises au sol.

## Revendications

1. Procédé de traitement antibrouillage d'un signal radioélectrique émis par une source et obtenu par modulation d'une porteuse par un code d'étalement, le code d'étalement résultant de la multiplication d'une forme d'onde par chaque élément d'une séquence binaire propre à la source,
ledit procédé de traitement antibrouillage comprenant les étapes suivantes :

   - réception, en M capteurs distincts (Ai, i = 1 à M), dudit signal radioélectrique ;
   - détermination de la corrélation entre des échantillons de signal issus de la réception, à L instants distincts, auxdits M capteurs, dudit signal, puis détermination de coefficients de pondération en fonction de ladite corrélation déterminée, M et L étant des entiers positifs, et un au moins de M et L étant strictement supérieur à 1 ;
   - obtention d'un signal traité ($S_{stap}$) par combinaison linéaire desdits échantillons de signal issus de la réception à L instants distincts, auxdits M capteurs et pondérés par lesdits coefficients de pondération ;

   ledit procédé étant **caractérisé en ce que** ladite corrélation entre des échantillons est déterminée après filtrage desdits échantillons par un filtre ($F_{adaptm}$, m = 1 à M) ayant une réponse impulsionnelle fonction de ladite forme d'onde.

2. Procédé de traitement antibrouillage selon la revendication 1, selon lequel ledit filtre ($F_{adaptm}$, m = 1 à M) est associé à une réponse impulsionnelle sensiblement égale à la forme d'onde.

3. Procédé de traitement antibrouillage selon la revendication 1 ou 2, selon lequel ladite obtention du signal traité ($S_{stap}$) est effectuée par combinaison linéaire desdits échantillons de signal issus de la réception à L instants distincts, auxdits M capteurs, filtrés par ledit filtre ($F_{adaptm}$, m = 1 à M) et pondérés par lesdits coefficients de pondération.

4. Procédé de traitement antibrouillage selon l'une des revendications 1 à 3, selon lequel ledit filtre ($F_{adaptim}$ m = 1 à M) est un filtre à horizon glissant.

5. Procédé de traitement antibrouillage selon la revendication 4, selon lequel ledit filtre ($F_{adaptm}$, m = 1 à M) est un filtre comprenant un additionneur, un soustracteur, une ligne à retard provoquant un retard égal à la durée de la forme d'onde ($T_c$) et un élément à retard provoquant le retard d'une durée séparant deux échantillons du signal sur une boucle de rétroaction de la sortie du soustracteur vers l'entrée de l'additionneur.

6. Procédé de traitement antibrouillage selon l'une quelconque des revendications précédentes, selon lequel ladite corrélation entre des échantillons est déterminée après un sous-échantillonnage desdits échantillons filtrés.

7. Procédé de traitement antibrouillage selon l'une quelconque des revendications précédentes, selon lequel la détermination de ladite corrélation entre des échantillons issus de la réception, à L instants distincts, auxdits M capteurs, comprend la détermination d'une matrice d'intercorrélation et la multiplication de l'inverse de ladite matrice d'intercorrélation par une fonction vectorielle de contrainte, ladite fonction vectorielle de contrainte étant fonction de la densité spectrale de puissance de ladite forme d'onde.

8. Procédé de traitement antibrouillage selon la revendication 7, selon lequel ladite fonction vectorielle de contrainte est en outre fonction de la réponse fréquentielle d'un filtre analogique réalisé sur chaque voie entre la réception au point d'accès et la numérisation.

9. Procédé de traitement antibrouillage selon l'une quelconque des revendications précédentes, selon lequel le signal radioélectrique est de type modulation BOC comportant une première composante centrée sur une fréquence $f_{carrier}$ - $f_{sub-carrier}$ et une deuxième composante centrée sur une fréquence $f_{carrier}$ + $f_{sub-carrier}$, et selon lequel ledit procédé de traitement antibrouillage est réalisé de manière indépendante d'une part sur la première composante, et d'autre part sur la deuxième composante.

**EP 2 908 155 B1**

**10.** Procédé de traitement antibrouillage selon l'une quelconque des revendications précédentes, selon lequel le signal radioélectrique source est émis par un satellite d'un système de positionnement par satellite, ledit procédé comportant une étape de détermination de position en fonction d'au moins ledit signal traité obtenu.

**11.** Programme d'ordinateur à installer dans un module de traitement antibrouillage, ledit programme comportant des instructions pour mettre en oeuvre les étapes d'un procédé suivant l'une des revendications 1 à 10 lors d'une exécution du programme par des moyens de traitement dudit module.

**12.** Module de traitement antibrouillage d'un signal radioélectrique émis par une source et obtenu par modulation d'une porteuse par un code d'étalement, le code d'étalement résultant de la multiplication d'une forme d'onde par chaque élément d'une séquence binaire propre à la source,
ledit module comprenant :

- M capteurs distincts (Ai, i = 1 à M) adaptés pour recevoir ledit signal radioélectrique ;

ledit module de traitement antibrouillage étant adapté pour déterminer la corrélation entre des échantillons de signal issus de la réception, à L instants distincts, auxdits M capteurs, dudit signal, puis pour déterminer des coefficients de pondération en fonction de ladite corrélation déterminée, M et L étant des entiers positifs, et un au moins de M et L étant strictement supérieur à 1 ;
ledit module de traitement antibrouillage étant en outre adapté pour obtenir un signal traité ($S_{stap}$) par combinaison linéaire desdits échantillons de signal issus de la réception à L instants distincts, auxdits M capteurs et pondérés par lesdits coefficients de pondération ; ledit module de traitement antibrouillage étant **caractérisé en ce qu'**il comprend un filtre ($F_{adaptm}$, m = 1 à M) ayant une réponse impulsionnelle fonction de ladite forme d'onde et **en ce qu'**il est adapté pour filtrer lesdits échantillons par ledit filtre, ladite corrélation déterminée par le module de traitement antibrouillage étant la corrélation entre lesdits échantillons filtrés.

**13.** Module de traitement antibrouillage selon la revendication 12, dans lequel ledit filtre ($F_{adaptm}$, m = 1 à M) est associé à une réponse impulsionnelle sensiblement égale à la forme d'onde.

**14.** Module de traitement antibrouillage selon la revendication 12 ou 13, adapté pour obtenir ledit signal traité ($S_{stap}$) en effectuant une combinaison linéaire desdits échantillons de signal issus de la réception à L instants distincts, auxdits M capteurs, filtrés par ledit filtre ($F_{adaptm}$, m = 1 à M) et pondérés par lesdits coefficients de pondération.

**15.** Module de traitement antibrouillage selon l'une des revendications 12 à 14, dans lequel ledit filtre ($F_{adaptim}$ m = 1 à M) est un filtre à horizon glissant.

**16.** Module de traitement antibrouillage selon la revendication 15, dans lequel ledit filtre ($F_{adaptm}$, m = 1 à M) comprend un additionneur, un soustracteur, une ligne à retard provoquant un retard égal à la durée de la forme d'onde ($T_c$) et un élément à retard provoquant le retard d'une durée séparant deux échantillons du signal sur une boucle de rétroaction de la sortie du soustracteur vers l'entrée de l'additionneur.

**17.** Module de traitement antibrouillage selon l'une quelconque des revendications 12 à 16, comprenant un sous-échantillonneur adapté pour sous-échantillonner lesdits échantillons filtrés, ladite corrélation déterminée par le module de traitement antibrouillage étant la corrélation entre lesdits échantillons filtrés et sous-échantillonnés.

**18.** Module de traitement antibrouillage selon l'une quelconque des revendications 12 à 17, adapté pour, lors de la détermination de la corrélation entre lesdits échantillons issus de la réception, à L instants distincts, auxdits M capteurs, déterminer une matrice d'intercorrélation et pour multiplier l'inverse de ladite matrice d'intercorrélation par une fonction vectorielle de contrainte, ladite fonction vectorielle de contrainte étant fonction de la densité spectrale de puissance de ladite forme d'onde.

**19.** Module de traitement antibrouillage selon la revendication 18, dans lequel ladite fonction vectorielle de contrainte est en outre fonction de la réponse fréquentielle d'un filtre analogique réalisé sur chaque voie entre la réception au point d'accès et la numérisation.

**20.** Module de traitement antibrouillage selon l'une quelconque des revendications 12 à 19, dans lequel le signal radioélectrique est de type modulation BOC comportant une première composante centrée sur une fréquence $f_{carrier}$ - $f_{sub\text{-}carrier}$ et une deuxième composante centrée sur une fréquence $f_{carrier}$ + $f_{sub\text{-}carrier}$, ledit module de traitement antibrouillage étant adapté pour déterminer des premiers coefficients de pondération en fonction de ladite corrélation des échantillons déterminée pour la première composante exclusivement et pour déterminer des seconds coefficients de pondération en fonction de ladite corrélation des échantillons déterminée pour la deuxième composante exclusivement,

ledit module de traitement antibrouillage étant adapté pour obtenir une première composante de signal traité ($S_{stap}$) par combinaison linéaire desdits échantillons de la première composante exclusivement pondérés par lesdits premiers coefficients de pondération et pour obtenir une seconde composante de signal traité ($S_{stap}$) par combinaison linéaire desdits échantillons de la seconde composante exclusivement pondérés par lesdits seconds coefficients de pondération.

21. Module de traitement antibrouillage selon l'une quelconque des revendications 12 à 20, pour un système de positionnement par satellite, dans lequel le signal radioélectrique source est émis par un satellite du système de positionnement par satellite, ledit module de traitement étant adapté en outre pour déterminer une position en fonction d'au moins ledit signal traité obtenu.

**Patentansprüche**

1. Verfahren zur Entstörverarbeitung eines Funksignals, das von einer Quelle gesendet und durch Modulation einer Trägerwelle mit einem Spreizcode erhalten wird, wobei sich der Spreizcode aus der Multiplikation einer Wellenform mit jedem Element einer quelleneigenen Binärsequenz ergibt,
wobei das Verfahren zur Entstörverarbeitung die folgenden Schritte umfasst:

- Empfangen des Funksignals an M einzelnen Aufnehmern (Ai, i = 1 bis M);
- Bestimmen der Korrelation zwischen Signalproben, die aus dem Empfang des Signals in L einzelnen Augenblicken an den M Aufnehmern stammen, dann Bestimmen von Gewichtungskoeffizienten in Abhängigkeit von der bestimmten Korrelation, wobei M und L positive ganze Zahlen sind, und wobei M oder L strikt größer als 1 ist;
- Erhalten eines verarbeiteten Signals ($S_{stap}$) durch lineare Kombination der Signalproben, die aus dem Empfang in L einzelnen Augenblicken an den M Aufnehmern stammen und mit den Gewichtungskoeffizienten gewichtet sind;

wobei das Verfahren **dadurch gekennzeichnet ist, dass** die Korrelation zwischen den Proben nach Filterung der Proben durch ein Filter ($F_{adaptm}$, m = 1 bis M) bestimmt wird, das eine von der Wellenform abhängige Impulsantwort hat.

2. Verfahren zur Entstörverarbeitung nach Anspruch 1, wobei das Filter ($F_{adaptm}$, m = 1 bis M) einer Impulsantwort von im Wesentlichen gleich der Wellenform zugeordnet ist.

3. Verfahren zur Entstörverarbeitung nach Anspruch 1 oder 2, wobei das Erhalten des verarbeiteten Signals ($S_{stap}$) durch lineare Kombination der Signalproben erfolgt, die aus dem Empfang in L einzelnen Augenblicken an den M Aufnehmern stammen, durch das Filter ($F_{adaptm}$, m = 1 bis M) gefiltert und mit den Gewichtungskoeffizienten gewichtet sind.

4. Verfahren zur Entstörverarbeitung nach einem der Ansprüche 1 bis 3, wobei das Filter ($F_{adaptim}$, m = 1 bis M) ein Filter mit Gleithorizont ist.

5. Verfahren zur Entstörverarbeitung nach Anspruch 4, wobei das Filter ($F_{adaptm}$, m = 1 bis M) ein Filter ist, das einen Addierer, einen Subtrahierer, eine Verzögerungsleitung, die eine Verzögerung hervorruft, die gleich der Dauer der Wellenform ($T_c$) ist, und ein Verzögerungselement umfasst, das die Verzögerung mit einer Dauer hervorruft, die zwei Proben vom Signal in einer Rückkopplungsschleife des Ausgangs des Subtrahierers zum Eingang des Addierers abtrennt.

6. Verfahren zur Entstörverarbeitung nach einem der vorhergehenden Ansprüche, wobei die Korrelation zwischen den Proben nach einer Teilabtastung der gefilterten Proben bestimmt wird.

7. Verfahren zur Entstörverarbeitung nach einem der vorhergehenden Ansprüche, wobei das Bestimmen der Korrelation zwischen Signalproben, die aus dem Empfang in L einzelnen Augenblicken an den M Aufnehmern stammen, das Bestimmen einer Interkorrelationsmatrix und die Multiplikation des Kehrwerts der Interkorrelationsmatrix mit einer Beschränkungsvektorfunktion umfasst, wobei die Beschränkungsvektorfunktion von der spektralen Leistungsdichte der Wellenform abhängt.

**8.** Verfahren zur Entstörverarbeitung nach Anspruch 7, wobei die Beschränkungsvektorfunktion darüber hinaus vom Frequenzansprechen eines analogen Filters abhängt, das auf jedem Pfad zwischen dem Empfang am Zugangspunkt und der Digitalisierung ausgebildet ist.

**9.** Verfahren zur Entstörverarbeitung nach einem der vorhergehenden Ansprüche, wobei das Funksignal vom Typ BOC-Modulation ist, eine erste Komponente umfasst, die auf eine Frequenz carrier - $f_{sub-carrier}$ zentriert ist, und eine zweite Komponente, die auf eine Frequenz $f_{carrier}$ + $f_{sub-carrier}$ zentriert ist, und wobei das Verfahren zur Entstörverarbeitung unabhängig einerseits an der ersten Komponente und andererseits an der zweiten Komponente durchgeführt wird.

**10.** Verfahren zur Entstörverarbeitung nach einem der vorhergehenden Ansprüche, wobei das Ursprungsfunksignal von einem Satelliten eines Satellitenpositionierungs-systems ausgesendet wird, wobei das Verfahren einen Positionsbestimmungsschritt in Abhängigkeit von zumindest dem erhaltenen verarbeiteten Signal umfasst.

**11.** Computerprogramm, das in einem Entstörverarbeitungsmodul zu installieren ist, wobei das Programm Instruktionen umfasst, um die Schritte eines Verfahrens nach einem der Ansprüche 1 bis 10 bei einer Ausführung des Programms durch Verarbeitungseinrichtungen des Moduls umzusetzen.

**12.** Entstörverarbeitungsmodul für ein Funksignal, das von einer Quelle gesendet und durch Modulation einer Trägerwelle mit einem Spreizcode erhalten wird, wobei sich der Spreizcode aus der Multiplikation einer Wellenform mit jedem Element einer quelleneigenen Binärsequenz ergibt,
wobei das Modul umfasst:

- M einzelne Aufnehmer (Ai, i = 1 bis M), die zum Empfangen des Funksignals angepasst sind;
- wobei das Entstörverarbeitungsmodul dazu angepasst ist, die Korrelation zwischen Signalproben, die aus dem Empfang des Signals in L einzelnen Augenblicken an den M Aufnehmern stammen, zu bestimmen, und dann Gewichtungskoeffizienten in Abhängigkeit von der bestimmten Korrelation, wobei M und L positive ganze Zahlen sind, und wobei M oder L strikt größer als 1 ist, zu bestimmen;
- wobei das Entstörverarbeitungsmodul darüber hinaus dazu angepasst ist, ein verarbeitetes Signal ($S_{stap}$) durch lineare Kombination der Signalproben, die aus dem Empfang in L einzelnen Augenblicken an den M Aufnehmern stammen und mit den Gewichtungskoeffizienten gewichtet sind, zu erhalten;

wobei das Entstörverarbeitungsmodul **dadurch gekennzeichnet ist, dass** es ein Filter ($F_{adaptm}$, m = 1 bis M) umfasst, das eine von der Wellenform abhängige Impulsantwort hat, und dass es dazu angepasst ist, die Proben mit dem Filter zu filtern, wobei die durch das Entstörverarbeitungsmodul bestimmte Korrelation die Korrelation zwischen den gefilterten Proben ist.

**13.** Entstörverarbeitungsmodul nach Anspruch 12, wobei das Filter ($F_{adaptm}$, m = 1 bis M) einer Impulsantwort von im Wesentlichen gleich der Wellenform zugeordnet ist.

**14.** Entstörverarbeitungsmodul nach Anspruch 12 oder 13, das dazu angepasst ist, das verarbeitete Signal ($S_{stap}$) zu erhalten, indem eine lineare Kombination der Signalproben erfolgt, die aus dem Empfang in L einzelnen Augenblicken an den M Aufnehmern stammen, durch das Filter ($F_{adaptm}$, m = 1 bis M) gefiltert und mit den Gewichtungskoeffizienten gewichtet sind.

**15.** Entstörverarbeitungsmodul nach einem der Ansprüche 12 bis 14, wobei das Filter ($F_{adaptim}$, m = 1 bis M) ein Filter mit Gleithorizont ist.

**16.** Entstörverarbeitungsmodul nach Anspruch 15, wobei das Filter ($F_{adaptm}$, m = 1 bis M) einen Addierer, einen Subtrahierer, eine Verzögerungsleitung, die eine Verzögerung hervorruft, die gleich der Dauer der Wellenform ($T_c$) ist, und ein Verzögerungselement umfasst, das die Verzögerung mit einer Dauer hervorruft, die zwei Proben vom Signal in einer Rückkopplungsschleife des Ausgangs des Subtrahierers zum Eingang des Addierers abtrennt.

**17.** Entstörverarbeitungsmodul nach einem der Ansprüche 12 bis 16, einen Teilabtaster umfassend, der dazu angepasst ist, die gefilterten Proben teilabzutasten, wobei die durch das Entstörverarbeitungsmodul bestimmte Korrelation die Korrelation zwischen den gefilterten und teilabgetasteten Proben ist.

18. Entstörverarbeitungsmodul nach einem der Ansprüche 12 bis 17, das dazu angepasst ist, beim Bestimmen der Korrelation zwischen Proben, die aus dem Empfang in L einzelnen Augenblicken an den M Aufnehmern stammen, eine Interkorrelationsmatrix zu bestimmen und den Kehrwert der Interkorrelationsmatrix mit einer Beschränkungsvektorfunktion zu multiplizieren, wobei die Beschränkungsvektorfunktion von der spektralen Leistungsdichte der Wellenform abhängt.

19. Entstörverarbeitungsmodul nach Anspruch 18, wobei die Beschränkungsvektorfunktion darüber hinaus vom Frequenzansprechen eines analogen Filters abhängt, das auf jedem Pfad zwischen dem Empfang am Zugangspunkt und der Digitalisierung ausgebildet ist.

20. Entstörverarbeitungsmodul nach einem der Ansprüche 12 bis 19, wobei das Funksignal vom Typ BOC-Modulation ist, eine erste Komponente umfasst, die auf eine Frequenz $f_{carrier}$ - $f_{sub-carrier}$ zentriert ist, und eine zweite Komponente, die auf eine Frequenz $f_{carrier}$ + $f_{sub-carrier}$ zentriert ist, wobei das Entstörverarbeitungsmodul dazu angepasst ist, erste Gewichtungskoeffizienten in Abhängigkeit von der ausschließlich für die erste Komponente bestimmten Korrelation der Proben zu bestimmen, und zweite Gewichtungskoeffizienten in Abhängigkeit von der ausschließlich für die zweite Komponente bestimmten Korrelation der Proben zu bestimmen, wobei das Entstörverarbeitungsmodul dazu angepasst ist, eine erste Komponente des verarbeiteten Signals ($S_{stap}$) durch lineare Kombination der ausschließlich mit den ersten Gewichtungskoeffizienten gewichteten Proben der ersten Komponente zu erhalten, und eine zweite Komponente des verarbeiteten Signals ($S_{stap}$) durch lineare Kombination der ausschließlich mit den zweiten Gewichtungskoeffizienten gewichteten Proben der zweiten Komponente zu erhalten.

21. Entstörverarbeitungsmodul nach einem der Ansprüche 12 bis 20, für ein Satellitenpositionierungssystem, wobei das Ursprungsfunksignal von einem Satelliten des Satellitenpositionierungssystems ausgesendet wird, wobei das Entstörverarbeitungsmodul darüber hinaus dazu angepasst ist, eine Position in Abhängigkeit von zumindest dem erhaltenen verarbeiteten Signal zu bestimmen.

## Claims

1. An anti-jamming processing method for anti-jamming processing a radio frequency signal emitted by a source and obtained by modulation of a carrier via a spreading code, the spreading code resulting from the multiplication of a wave form by each element of a binary bit sequence specific to the source, said anti-jamming processing method comprising the following steps:

   - reception, in M distinct sensors (Ai, i = 1 to M) of said radio signal;
   - determination of the correlation between signal samples derived from the reception, at L distinct time instants, at said M sensors, of said signal, and then determination of the weighting coefficients based on said correlation determined, with M and L being positive integers, and at least one of M and L being strictly greater than 1;
   - obtaining of a processed signal ($S_{stap}$) by linear combination of said signal samples derived from the reception at L distinct time instants, at said M sensors and weighted by said weighting coefficients;

   said method being **characterised in that** said correlation between samples is determined after filtering of said samples through a filter ($F_{adaptm}$, m = 1 to M) having an impulse response that is a function of said wave form.

2. The anti-jamming processing method according to claim 1, wherein said filter ($F_{adaptm}$, m = 1 to M) is associated with an impulse response that is substantially equal to the wave form.

3. The anti-jamming processing method according to claim 1 or 2, wherein said obtaining of the processed signal ($S_{stap}$) is brought out by linear combination of said signal samples derived from the reception at L distinct time instants, at said M sensors, filtered by said filter ($F_{adaptm}$, m = 1 to M) and weighted by said weighting coefficients.

4. The anti-jamming processing method according to claims 1 to 3, wherein said filter ($F_{adaptm}$, m = 1 to M) is a moving horizon filter.

5. The anti-jamming processing method according to claim 4, wherein said filter ($F_{adaptm}$, m = 1 to M) is a filter that includes an adder, a subtractor, a delay line causing a delay equal to the duration of the wave form and a delay element causing a delay for a time period between two samples of the signal over a feedback loop from the output of the subtractor to the input of the adder.

6. The anti-jamming processing method according to any one of the preceding claims, wherein said correlation between samples is determined after a sub-sampling of said filtered samples.

7. The anti-jamming processing method according to any one of the preceding claims, wherein the determination of said correlation between samples derived from the reception, at L distinct time instants, at said M sensors, includes the determination of a cross correlation matrix and the multiplication of the inverse of said cross correlation matrix by a constraint vector function, with said constraint vector function being a function of the power spectral density of said wave form.

8. The anti-jamming processing method according to claim 7, wherein said constraint vector function is in addition also a function of the frequency response of an analogue filter implemented over each channel between the reception at the access point and the digitisation.

9. The anti-jamming processing method according to any one of the preceding claims, wherein the radio frequency signal is of the BOC (Binary Offset Carrier) modulation type including a first component centered on a frequency $f_{carrier} - f_{sub-carrier}$ and a second component centered on a frequency $f_{carrier} + f_{sub-carrier}$, and wherein said anti-jamming processing operation is performed in an independent manner on the one hand, on the first component, and on the other hand on the second component.

10. The anti-jamming processing method according to any one of the preceding claims, wherein the source radio frequency signal is transmitted by a satellite of a satellite positioning system, said method including a step of determination of position based on at least said obtained processed signal.

11. A computer programme to be installed in an anti-jamming processing module, said programme comprising of instructions for implementing the steps of a method according to one of claims 1 to 10 during the execution of the programme by data processing means of said module.

12. An anti-jamming processing module for anti-jamming processing a radio frequency signal transmitted by a source and obtained by modulation of a carrier via a spreading code, the spreading code resulting from the multiplication of a wave form by each element of a binary bit sequence specific to the source, said module comprising:

   - M distinct sensors (Ai, i = 1 to M) capable of receiving said radio signal;

   said anti-jamming processing module being capable of determining the correlation between signal samples derived from the reception, at L distinct time instants, at said M sensors, of said signal, and then capable of determining the weighting coefficients based on said correlation determined, with M and L being positive integers, and at least one of M and L being strictly greater than 1;
   said anti-jamming processing module being further capable of obtaining a signal processed ($S_{stap}$) by linear combination of said signal samples derived from the reception at L distinct time instants, at said M sensors and weighted by said weighting coefficients;
   said anti-jamming processing module being **characterised in that** it comprises a filter ($F_{adaptm}$, m = 1 to M) having an impulse response that is a function of said wave form, and **in that** it is capable of filtering said samples by said filter, said correlation determined by the anti-jamming processing module being the correlation between said filtered samples.

13. The anti-jamming processing module according to claim 12, wherein said filter ($F_{adaptm}$, m = 1 to M) is associated with an impulse response that is substantially equal to the wave form.

14. The anti-jamming processing module according to claim 12 or 13, capable of obtaining said processed signal ($S_{stap}$) by performing a linear combination of said signal samples derived from the reception at L distinct time instants, at said M sensors, filtered by said filter ($F_{adaptm}$, m = 1 to M) and weighted by said weighting coefficients.

15. The anti-jamming processing module according to one of claims 12 to 14, wherein said filter ($F_{adaptm}$, m = 1 to M) is a moving horizon filter.

**16.** The anti-jamming processing module according to claim 15, wherein said filter ($F_{adaptm}$, m = 1 to M) includes an adder, a subtractor, a delay line causing a delay equal to the duration of the wave form ($T_c$) and a delay element causing a delay for a time period between two samples of the signal over a feedback loop from the output of the subtractor to the input of the adder.

**17.** The anti-jamming processing module according to any one of claims 12 to 16, including a sub-sampler capable of sub-sampling said filtered samples, said correlation determined by the anti-jamming processing module being the correlation between said filtered samples and sub samples.

**18.** The anti-jamming processing module according to any one of claims 12 to 17, that is capable, during the determination of the correlation between said samples derived from the reception, at L distinct time instants, at said M sensors, of determining a cross correlation matrix and multiplying the inverse of said cross correlation matrix by a constraint vector function, with said constraint vector function being a function of the power spectral density of said wave form.

**19.** The anti-jamming processing module according to claim 18, wherein said constraint vector function is in addition also a function of the frequency response of an analogue filter implemented over each channel between the reception at the access point and the digitisation.

**20.** The anti-jamming processing module according to any one of claims 12 to 19, wherein the radio frequency signal is of the BOC modulation type including a first component centered on a frequency $f_{carrier} - f_{sub-carrier}$ and a second component centered on a frequency $f_{carrier} + f_{sub-carrier}$, said anti-jamming processing module being capable of determining the first weighting coefficients based on said correlation of the samples determined for the first component exclusively, and capable of determining the second weighting coefficients based on said correlation of samples determined for the second component exclusively,
said anti-jamming processing module being capable of obtaining a first processed signal component ($S_{stap}$) by linear combination of said samples of the first component exclusively weighted by said first weighting coefficients and of obtaining a second processed signal component ($S_{sta}p$) by linear combination of said samples of the second component exclusively weighted by said second weighting coefficients.

**21.** The anti-jamming processing module according to any one of claims 12 to 20, for a satellite positioning system, wherein the source radio frequency signal is transmitted by a satellite of a satellite positioning system, said processing module being further capable of determining a position based on at least said processed signal obtained.

EP 2 908 155 B1

FIG.1

FIG.2

FIG.3

## FIG.4

## FIG.5

100

| Réception signaux par Ai $_{i=1 \text{ à } M}$ | —101 |

| Prétraitement dont numérisation | —102 |

Traitement antibrouillage

| Processus STAP | —103_1 |

| Calcul des coefficients de pondération | —103_2 |

—103

| Traitement par canal satellite | —104 |

## FIG.6

FIG.7

EP 2 908 155 B1

FIG.8

FIG.9

EP 2 908 155 B1

**EP 2 908 155 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20130154880 A